(19) **Europäisches Patentamt / European Patent Office / Office européen des brevets**

(11) **EP 4 369 576 A1**

(12) # EUROPEAN PATENT APPLICATION

(43) Date of publication:
**15.05.2024   Bulletin 2024/20**

(21) Application number: **22206587.2**

(22) Date of filing: **10.11.2022**

(51) International Patent Classification (IPC):
**H02K 16/02** (2006.01)      **H02K 17/02** (2006.01)
**B63H 3/02** (2006.01)

(52) Cooperative Patent Classification (CPC):
**B63H 3/02; B64C 11/44; H02K 16/02; H02K 17/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **YourSky Management**
**7800 Ath (BE)**

(72) Inventor: **Crepin, Jean-Philippe**
**7800 Ath (BE)**

(74) Representative: **Calysta NV**
**Lambroekstraat 5a**
**1831 Diegem (BE)**

(54) **INDUCTION MACHINE WITH A VARIABLE BLADE ANGLE MECHANISM**

(57)   Propellor system with variable blade-angle mechanism for a propellor, wherein the propellor system comprising an induction machine and a mechanism for changing a blade-angle of a blade of the propellor, wherein the induction machine comprises: A stator (1) with stator circuit (2) conducting a machine current; a first rotor (3) arranged to rotate around a machine axis (6) with respect to the stator (1), wherein the first rotor (3) comprising a first rotor circuit (4), wherein the first rotor circuit (4) is configured to electromagnetically couple with the stator circuit (2), wherein the first rotor (3) is configured to be connected rotatably to the propellor; a second rotor (7) arranged to rotate around the machine axis (6) with respect to the stator (1), the second rotor (7) comprising a second rotor circuit (8), wherein the second rotor circuit (8) is configured to electromagnetically couple with the stator circuit (2); a coupling (10) configured to couple the rotation of first rotor (3) with the rotation of the second rotor (7) and to allow a relative movement of the first rotor with respect to the second rotor (7); a control circuit for controlling the relative rotational position of the second rotor (7) with respect to the first rotor (3) by controlling at least one parameter of the stator circuit (2), of the first rotor circuit (4) and/or of the second rotor circuit (7); wherein the mechanism for changing the blade-angle is configured to change the blade of the propellor based on the relative rotational position of the second rotor (7) with respect to the first rotor (3).

Fig. 1

## Description

### Technical Field

The present invention relates to an induction machine for a propellor with a variable blade angle mechanism.

### Prior art

Propellors (incl. rotors) are used to transform a rotational energy into a fluid flow or vice versa. In particular for vehicles moving in a fluid like air or water, the propellor creates thrust or lift to move or control the vehicle. Such a vehicle can be a propellor based aircraft or watercraft. The fluid flow generated by a propellor at a certain rotation speed depends on the blade angle of the propellor. Therefore, there are some propellors which have a variable blade angle mechanism (sometimes also called variable pitch mechanism). This mechanism allows for example during flight (or movement) to change the angle. This allows for example in an airplane to use a different blade angle for starting and landing, while using another blade angle during normal flight. Even more complex variable blade angle mechanisms exist for example in helicopters which allow at one side to change the blade angle of all blades together to change the lift created, but on the other side to change the blade angle differently over the 360° around the rotation axis of the propellor. This is also called cyclic control. Similar variable blade angle mechanisms exist also for watercrafts like ships. But not only in vehicles, but also in pumps, wind power plants and many more propellor based devices exist variable blade angle mechanisms. These variable blade mechanisms are normally realized by a complex and heavy mechanism. Those mechanism require many parts which increases the complexity for assembling and maintenance.

EP2490935 discloses a propellor with a variable blade angle mechanism. Herein, a second motor actuator is placed on the main rotor of the propellor, wherein this second motor actuator can control the pitch angle of the propellor blades. Thus, a heavy and complex actuator must be placed on the rotor, which increases the inertia of the rotor and thus the energy consumption. In addition, the control signals for the actuator must be transferred on the rotating rotor, e.g. with slip rings which causes wear and maintenance.

EP2028099 discloses a propellor with a variable blade angle mechanism. The propellor is driven by a first electric motor comprising a stator and a rotor. The variable blade angle mechanism is driven by a second motor comprising a different stator and rotor. When the two motor or rotors are driven at the same speed, the blade angle is kept constant. When the two motors or rotors are driven differently, the two rotors will not rotate at the same speed causing the variable blade angle mechanism to change the angle of the blades. This solution is also complex as it requires two full motors and two motor drives. Also, the motor drive must be very precise so that the rotation speed of the two rotors are exactly the same, when the blade angle should be kept constant.

EP3681023 discloses an electric motor with one single stator driving two rotors by the same magnetic field created by the single stator. The two rotors drive two propellors at the same speed but in opposite rotation directions. For adjusting the blades of the propellors, a distinct variable blade angle mechanism is required for both propellors.

All existing solutions for variable blade angle mechanism are complex, heavy and/or require many parts. This problem applies equally to aircrafts, watercrafts, pumps, windmills and all other propellor based devices.

### Brief summary of the invention

It is the object of the invention to provide a simpler mechanism for a variable blade which avoids the mentioned problems of the state of the art.

According to the invention, this object is solved a propellor system. The propellor system according to the invention comprising an induction machine and a mechanism for changing a blade-angle of a blade of a propellor. The induction machine comprises: a stator with stator circuit conducting a machine current; a first rotor arranged to rotate around a machine axis with respect to the stator, wherein the first rotor comprising a first rotor circuit, wherein the first rotor circuit is configured to electromagnetically couple with the stator circuit, wherein the first rotor is configured to be connected to the propellor; a second rotor arranged to rotate around the machine axis with respect to the stator, the second rotor comprising a second rotor circuit, wherein the second rotor circuit is configured to electromagnetically couple with the stator circuit, a coupling configured to couple the rotation of first rotor with the rotation of the second rotor and to allow a relative movement of the first rotor with respect to the second rotor; a control circuit for controlling the relative rotational position of the second rotor with respect to the first rotor by controlling at least one parameter of the stator circuit, of the first rotor circuit and/or of the second rotor circuit; wherein the mechanism for changing the blade-angle is configured to change the blade of the propellor based on the relative rotational position of the second rotor with respect to the first rotor.

The coupling between first rotor and the second rotor allows to achieve a stable rotational position between the first rotor and the second rotor. Since the relative rotational position between the two rotors controls the blade angle, a stable blade angle can be achieved by the setting of the relative position of the first and second rotor. Since the blade angle or the relative position of the two rotors depend on the electromagnetic torque applied on the second rotor circuit equilibrated by the load applied by the coupling, the blade angle can be controlled by the electrical parameters of the induction machine which avoids an additional control for the variable blade angle. Also, it is not necessary to have an additional bulky mechanism for changing the blade angle, it is sufficient to have a second rotor in the induction machine. Therefore, the variable blade mechanism can be realized very small and light.

The invention is further solved by an aircraft comprising such a propellor system, wherein the propellor system is configured to produce thrust and/or lift for the movement and/or sustentation of the aircraft.

The invention is further solved by a wind or water turbine system comprising such a propellor system, wherein the induction machine of the propellor system is configured to act as a generator.

The dependent claims refer to further advantageous embodiments.

In one embodiment, the coupling is an elastic coupling which causes an increasing return torque when the relative distance of the relative rotational position with respect to a reference angular position of the second rotor with respect to the first rotor increase, wherein the relative rotational position of the second rotor with respect to the first rotor is defined by the equilibrium state of the return torque and the electromagnetic torque applied by the stator on the second rotor circuit, wherein this electromagnetic torque applied on the second rotor is controlled based on the at least one parameter of the stator circuit, of the first rotor circuit and/or of the second rotor circuit. This allows to achieve a continuous control of the blade angle as each torque applied on the second rotor corresponds to a different relative equilibrium position of the first and second rotor with respect to the return torque.

In one embodiment, the first rotor circuit and/or the second rotor circuit comprise a variable rotor parameter which can be changed, wherein the relative rotational position depends on the variable rotor parameter. Preferably, the first rotor and/or the second rotor comprise a winding connected to a variable electric component, wherein the variable electric rotor parameter can be changed over the variable electric component. Preferably, the variable electric component is arranged outside of the first or second rotor and connected with the winding in the first and/or second rotor over a slip ring. This embodiment has the advantage that the blade angle can be controlled independently from the electric parameters of the stator circuit and thus of the remaining propellor control.

In one embodiment, the relative rotational position depends on at least one variable stator parameter of the stator circuit, wherein the variable stator parameter refers preferably to a variable electric parameter of the machine current. This has the advantage that the motor control can be used for controlling the blade angle and the propellor speed/torque.

In one embodiment, the relative rotational position is configured to be controlled by the amplitude of a supply voltage of the machine current.

In one embodiment, the relative rotational position is configured to be controlled by the amplitude and the pulsation of the supply voltage of the machine current. This embodiment has the advantage that the torque can be controlled while more accurately controlling the speed, a specific case being to keep the speed constant.

In one embodiment, the mechanism for changing the blade-angle of a blade of the propellor is configured to change the blade angle of a plurality of blades differently, wherein the second rotor comprises a plurality of second rotor segments which are arranged rotatably to each other, wherein each second rotor segment has a different coupling with respect to the first rotor, wherein each second rotor segment has a second rotor circuit segment electromagnetically coupled to the stator circuit, wherein the relative rotational position of each second rotor segment with respect to the first rotor controls the blade-angle of at least one blade of the propellor. This embodiment allows to control the different blades of a propellor independently. Preferably, the second rotor circuit segments are electrically connected or short-circuited together to form the second rotor circuit.

In one embodiment, the at least one electric parameter of the induction machine comprise a plurality electric parameters referring to one or more electric parameters of the induction machine at different rotational positions of the induction machine, wherein the different electric parameters at the different rotational positions can be controlled such that the second rotor segments when passing at a first rotational position have a first relative rotational position with respect to the first rotor depending on the electric parameter(s) at the first rotational position, while the second rotor segments when passing at a second rotational position have a second relative rotational position with respect to the first rotor depending on the electric parameter(s) at the second rotational position. With this embodiment, a cyclic control of the different blades of the propellor can be achieved without the bulky control mechanisms known in the state of the art.

In one embodiment, each second rotor segment comprises at least one winding, wherein the induction machine comprises a slip ring which connected at different rotational positions with different variable electric components, wherein the windings of the second rotor segments are connected to the variable electric component connected with the slip ring at its respective angular position so that the different electric parameters at different angular positions are realized by the different variable electric components.

In one embodiment, the stator circuit comprises different stator windings arranged at different rotational positions of the induction motor, wherein the different electric parameters at different angular positions are realized by the different windings.

In one embodiment, the second rotor circuit segments of neighboring second rotor segments are serially connected to short circuit in a circle.

In one embodiment, the first and second rotor are arranged in the same rotating magnetic field generated from the same stator circuit. This embodiment is particularly advantageous as the size and weight can be reduced by using only one stator circuit.

In one embodiment, the stator circuit comprises a first stator circuit and a second stator circuit, wherein the first rotor is electromagnetically coupled to the first stator circuit and the second rotor is electromagnetically coupled to the second stator circuit.

In one embodiment, the propellor system comprising further the propellor which has at least one blade, wherein the propellor is connected to the first rotor such that the propellor rotates with the rotation speed of the first rotor, wherein the blade angle of the at least one blade is controlled by the relative rotational position between the first rotor and the second rotor.

Other embodiments according to the present invention are mentioned in the appended claims and the subsequent description of an embodiment of the invention.

## Brief description of the Drawings

Fig. 1 is a cross section view along the machine axis of the upper part of the induction machine and along one blade axis.

Fig. 2 is a cross section view of the induction machine perpendicular to its machine axis showing the coupling between the first rotor and the second rotor.

Fig. 3 shows a schematical electrical circuit representing an induction machine according to the prior art.

Fig. 4 shows an equivalent schematical electrical circuit representing an induction machine according to the prior art.

Fig. 5 shows the working point of an induction motor according to the prior art at the intersection of the motor curve and the charge curve in the speed over thrust diagram.

Fig. 6 shows the change of the speed of an induction motor according to the prior art, when modifying the supply voltage of the motor.

Fig. 7 shows the change of the speed and the thrust of an induction motor according to a fist control embodiment of the invention, when modifying the supply voltage of the motor.

Fig. 8 shows the change of the thrust of an induction motor according to a second and a third control embodiment of the invention which allows to control the thrust or load at constant speed.

Fig. 9 shows a further embodiment of the induction motor of the invention.

In the drawings, the same reference numbers have been allocated to the same or analogue element.

## Detailed description of an embodiment of the invention

Other characteristics and advantages of the present invention will be derived from the non-limitative following description, and by making reference to the drawings and the examples. Before starting the description of the exemplary embodiments of the invention, some terms shall be defined.

The term "propellor" shall refer to all devices which transfer rotational energy into a fluid flow and vice versa and which comprise at least one blade, preferably a plurality of blades. While propellors for aircrafts refer normally only to thrust producing propellors and lift producing propellors are called rotors, in here, propellors shall refer to thrust and/or lift producing propellors equally. When we talk subsequently about lift or thrust, the invention shall not be limited to one of the two, but can be equally applied to the other one. The term propellor shall equally be used for screws (e.g. in ships), turbines (in pumps, jets, generators), and all other kinds of devices transforming rotational energy by the rotation of the at least one blade around the propellor axis into a fluid flow or vice versa.

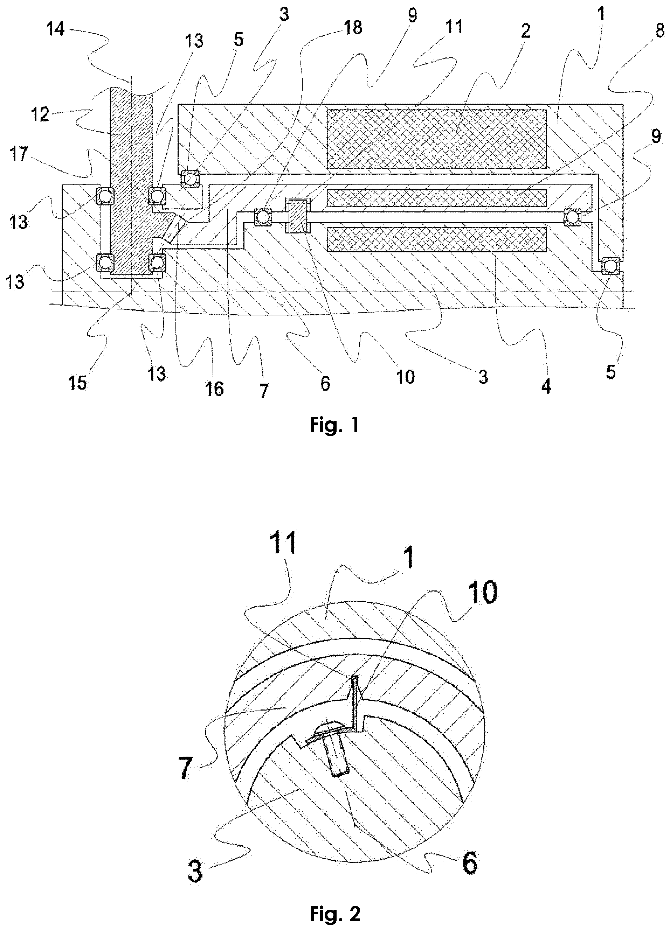

The propellor axis 6 defines the main rotation axis of the propellor. Each of the at least one blade extends along its blade axis 14 from the propellor axis 6, i.e. along the longitudinal axis of the blade. The blade axis 14 is arranged normally radially with respect to the propellor axis 6 as shown in the embodiment of Fig. 1. But in certain cases, it is also possible that the at least one blade (axis 14) is not arranged radially with respect to the propellor axis 6. But preferably the blade axis 14 and the propellor axis 6 have an angle of more than 45°, preferably of more than 70°, preferably more than 80°, preferably more than 85°.

The angle of the/each blade of the propellor is variable. This can preferably be achieved by arranging the/each blade of the propellor pivotable around its blade axis 14. In Fig. 1, the blade foot 12 is realized as an axle which is supported by bearings 13 in the propellor hub or the first rotor 3. If the blade form is curved such that the direction of the blade axis 14 changes along its longitudinal axis, the blade axis 14 shall refer to the direction of the blade axis 14 at the point along the blade where the blade is pivoted and/or where the blade leaves the propellor hub. The blade axis 14 is preferably parallel to the blade rotation axis 14, sometimes even coaxially. The/each blade is preferably supported by a blade axle 12 which is supported pivotably within the rotating propeller (hub). The blade axle 12 extends in the direction of the blade rotation axis 14. The blade axle 12 and/or the blade rotation axis 14 extends preferably radially from a propeller axis 6. The invention will be explained mainly for airborne propellors, primarily for lift-creating airborne propellors. However, the subsequent example shall not limit the invention and all subsequent explanations and embodiment can equally be applied to propellors working in other fluids like water or other gases and liquids. Also the subsequent formulas can be easily transferred to applications with different fluids, for thrust or for generators.

The invention refers to a propellor system with a variable blade mechanism. The propellor system comprises an induction machine and a mechanism for changing the blade angle of the propeller. The propellor system can comprise the propellor itself or can be just configured to be connected to a propellor or to the blade of a propeller. Fig. 1 and 2 show a first embodiment of the propellor system according to the invention.

The induction machine comprises a stator 1, a first rotor 3, a second rotor 7. Any induction machine is characterized by one (or here more) rotor(s) being able to rotate at a rotation speed/frequency (rotor speed) different than the rotation speed/frequency of (the magnetic field generated in) the stator (stator speed). The difference between the stator speed and the rotor speed is called slip of the induction machine. This is why the induction machine is also called asynchronous machine. The induction machine according to the invention can be an induction motor for driving the first and/or second rotor by a driving current (machine current) applied in the stator, an induction generator for generating energy by a current induced by rotation of the first and/or second rotor (or of the propeller) (machine current) or an induction motor/generator which can be operated as motor and generator as respectively explained before. Most subsequent examples will be explained for an induction motor but can analogously be applied to an induction generator.

The induction machine has a machine axis 6 around which the first and second rotor 3, 7 rotate. The machine axis 6 corresponds to the rotation axis of the induction machine, i.e. of the first and the second rotor 3, 7. The machine axis 6 and the propeller axis 6 are preferably coaxial as in the shown embodiment.

The stator 1 comprises a stator circuit 2 conducting a machine current. The machine current for the induction motor is the driving current driving the first and/or second rotor 3, 7. The stator circuit 2 comprises preferably at least one phase, preferably a plurality of phases, often three phases are used. However, also an induction machine with two phases or more than three phases is possible. Each phase comprises preferably at least one winding or pole, preferably a plurality of windings or poles. In most cases, an induction machine with three phases and 6 poles (two poles per phase) are used. However, depending on the application, other induction machines can be used. If a phase has a plurality of windings, they are distributed around the machine axis 6. The driving current is an AC current so that the driving current generates a rotating magnetic field in the stator circuit 2. In case of multiple phases, the AC current conducted in the different phases have different phases, i.e. different phase delays among each others (but the same AC frequency). The realization of a stator circuit 2 or stator winding for an induction motor is well known and is therefor not described in more detail. The same stator circuit 2 as in any common induction machine can be used.

The first rotor 3 is arranged rotatably around the machine axis 6 so that the first rotor 3 can rotate with respect to the stator 1. The first rotor 3 comprises a first rotor circuit 4 configured to electromagnetically couple with the stator circuit 2. The electromagnetic coupling is such that the driving current conducted in the stator circuit 2 induces a current in the first rotor circuit 4. The electromagnetic coupling is such that the first rotor 3 rotates, when the stator circuit 2 conducts the driving circuit.

The first rotor circuit 4 is any suitable rotor circuit for an induction machine. As in any induction machine, the first rotor circuit 4 is short-circuited such that the current induced in the first rotor circuit 4 runs in at least one loop in the first rotor circuit 4. The first rotor circuit 4 is configured to create under the effect of the rotating stator magnetic field an induced current in the first rotor circuit 4 which creates a torque on the first rotor 3 which tries to follow the rotation of the magnetic field in the stator circuit 2.

In a first embodiment of the rotor circuit 4, the first rotor circuit 4 is a squirrel-cage circuit. The squirrel-cage circuit comprises preferably two conducting wheels which are arranged opposed to each other and connected to form a cylinder rotating around the machine axis. The conducting wheels are connected between each other by a plurality of conductive elements, e.g. bars which connect the two conducting wheels conductively over the circumference of the two wheels. Due to the wheels, the bars or conducting elements are short circuited among each other. Each bar/conducting element between the two wheels forms a different short-circuited loop of the first rotor circuit 4. This design is well known for squirrel-cage type induction machines.

In a second embodiment of the rotor circuit 4, the first rotor circuit 4 is realized by a wound circuit. The wound circuit comprises preferably at least one, preferably at least two or more windings which are short-circuited to form a current loop. The number of windings can be chosen based on the number of phases of the stator circuit 2, preferably the same number of phases as the stator circuit 2. Preferably, the at least two windings are short circuited by a star or delta connection. In a simple embodiment, the windings are short-circuited on the first rotor 3. This embodiment will be subsequently called the simple wound rotor circuit. In another embodiment which will be called the variable wound rotor circuit, the at least one winding is connected each over a slip ring and brush to at least one variable electric component which allows to change the electrical parameters of the first rotor circuit 4. The at least one variable electric component is preferably a variable resistor like a potentiometer. Preferably, each winding of the at least two windings are connected with a respective variable electric component. Preferably, each winding is serially connected with the variable electric component together called branch, wherein each branch are connected to a common star point (or a corresponding delta connection). Preferably, the variable electric component (and the star point) is arranged outside of the first rotor 3, wherein the winding(s) are arranged in the first rotor 3. This allows to have the variable electric component which can be varied for changing the electrical parameters of the first rotor circuit 4 outside of the first rotor 3 and thus facilitating the management of the control. Preferably, each variable electric component is connected over a distinct slip ring - brush combination to its respective winding. If there are a plurality of variable electric components (e.g. one per winding), they are preferably controlled in the same way so that they always have the same resistance value. However, they can also be controlled differently.

The described embodiments of the first rotor circuit 4 are all well-known designs for rotor circuits of induction machines and any such rotor design for an induction machine can be used for the present invention.

The second rotor 7 is arranged to rotate around the machine axis 6 with respect to the stator 1. The second rotor 7 comprises a second rotor circuit 8 configured to electromagnetically couple with the stator circuit 2. The electromagnetic coupling is such that the driving current conducted in the stator circuit 2 induces a current in the second rotor circuit 8. The electromagnetic coupling between the two is such that the second rotor 7 rotates, when the stator circuit 2 conducts the driving circuit. The first and second rotor circuit 4, 8 are electrically independent from each other, i.e. their circuits are electrically insulated between them and/or galvanically not connected. However, in a preferred embodiment, the first and the second rotor circuit 4, 8 couple electromagnetically with the same stator circuit 2 of the stator 1. Thus, the first and the second rotor circuit 4, 8 are driven by the same magnetic field created by the driving current in the stator circuit 2.

The second rotor circuit 8 is any suitable rotor circuit for an induction machine. As in any induction machine, the second rotor circuit 8 is short-circuited such that the current induced in the second rotor circuit 8 runs in at least one loop in the second rotor circuit 8. The second rotor circuit 8 is configured to create under the effect of the rotating stator magnetic field an induced current in the second rotor circuit 8 which creates a torque of the second rotor 7 which tries to follow the rotation of the magnetic field in the stator circuit 2 (motor operation). In a first embodiment of the second rotor circuit 8, the second rotor circuit 8 is a squirrel cage circuit. The squirrel-cage circuit is preferably as explained above for the first rotor circuit 4. In a second embodiment of the second rotor circuit 8, the second rotor circuit 8 is a is realized by a wound circuit. The wound circuit is preferably as explained above for the first rotor circuit 4 and can be a simple wound circuit or a variable wound circuit. In the variable wound circuit, the electrical parameters of the second rotor circuit 8 can be varied. The type of the first and the second rotor circuit 4, 8 can be the same, e.g. both a squirrel-cage circuit or both a wound circuit. Even if the type of the first and second rotor circuit 4, 8 is chosen the same, the electrical parameters of the two electrical circuits 4, 8 can be chosen different. It is also possible to choose a different type of circuit for the first and the second rotor circuit 4, 8, (e.g. one the squirrel-cage circuit and the other the wound circuit). In a preferred embodiment, the first and second rotor circuits 4, 8 are chosen of the squirrel-cage type. In another embodiment, the second rotor circuit 8 is chosen of the wound type, simple one or with a variable resistor.

The design of the first rotor 3 and the second rotor 7 is preferably different so that the same driving current in the stator circuit 2 generates a different torque in the first rotor 3 and in the second rotor 7. Preferably, the design of the two rotors 3, 7 is such that the torque of the first rotor 3 is bigger than the torque of the second rotor 7, preferably the torque of the second rotor 7 is preferably smaller than 80%, preferably than 60%, preferably than 50%, preferably than 40%, preferably than 30%, preferably than 20% of the torque of the first rotor 3. But it is also possible that the first rotor 3 and the second rotor 7 are designed such that the torque of the first rotor 3 is equal to or even smaller than the torque of the second rotor 7.

In the shown embodiment, the stator 1 is arranged around the first and second rotor 3, 7. In a preferred embodiment, the first rotor 3 is supported rotatably on the stator 1, e.g. by bearings 5. Preferably, the second rotor 7 is supported rotatably on the first rotor 3, e.g. by bearings 9. Since the relative speed of the second rotor 7 with respect to the first rotor 3 is reduced, simpler bearings 9 can be used between the first rotor 3 and the second rotor 7, than between the stator 1 and the first rotor 3. However, it is obviously also possible to bear the first and second rotor 3, 7 differently, e.g. both with respect to the stator 1, or the second rotor 7 with respect to the stator 1 and the first rotor 3 with respect to the second rotor 7, or even differently. Also, the rotors 3, 7 must not be arranged within the stator 1, but could also be arranged both around the stator 1 or one inside the stator 1 and another outside the stator 1. The latter embodiment could have the advantage that the magnetic field of the stator 1 is not weakened by an intermediate rotor between the other rotor and the stator 1, but makes the coupling between the rotors 3, 7 more difficult as the coupling must be realized outside of the induction machine. The main bodies of the two rotors 3 and 7 are preferably made of a material that ensures good magnetic permeability to ensure that the two rotor electric circuits 4 and 8 benefit to the maximum from the effects of the magnetic field created by the stator circuit 2.

The first rotor 3 and the second rotor 7 are connected over a coupling. The coupling is such that it couples the rotation of the first rotor 3 with the rotation of the second rotator 7 but allows that the relative (rotation) position of the first rotor 3 and of the second rotor 7 can be changed. The coupling is preferably such that the relative position can be changed during operation of the induction machine, preferably by changing electrical parameters on the induction machine (e.g. of the stator circuit 2, of the first rotor circuit 4 and/or of the second rotor circuit 8) or by a change of the operational conditions like propellor speed, charge, etc. This will be explained more in detail below. The coupling is an additional coupling with respect to the electromagnetically coupling caused by the induction machine, i.e. with respect to the electromagnetically coupling both have with the stator circuit 2. Since the rotation speed of a rotor in an induction machine is not the same as the rotation frequency (pulsation frequency) of the magnetic field in the stator, the two rotors 3, 7 can have different rotation speeds based on the (electrical) parameter of the induction machine. The coupling allows to fix the relative position of the two rotors 3 and 7 so that they can rotate together with the same rotation speed but allows to control the relative (rotational) position of the two rotors 3, 7 so that the two rotors 3, 7 can rotate with different (stable) relative rotational positions. The relative rotational position refers to the difference of the two actual rotation angles of the first rotor 3 and the second rotor 7. When the induction machine runs in a stable state or control setting, the absolute rotation positions or angles might continuously change as the two rotors 3, 7 rotate around the machine axis 6. However, the relative rotational position, i.e. the angle difference between the two rotors 3, 7 remains stable or constant due to the coupling, when the control setting is not changed or when the induction machine runs in a stable state.

The coupling is preferably an elastic coupling 10, preferably a spring. In the shown embodiment, the spring 10 is realized by a leaf spring, but obviously other springs are possible. The elastic coupling 10 couples the first and the second rotor 3 and 7 in a reference relative rotational position and creates a return force/torque, when the relative position of the two rotors 3, 7 deviate from the reference relative position (when they want to run at different speeds), to force the two rotors 3, 7 into the reference relative position. The reference relative rotational position (or reference angle difference) is preferably zero. The return force/torque changes based on the amount of deviation from the reference relative position. The return force/thread depends normally linearly on the deviation, but could also depend nonlinearly on the deviation. The equilibrium state between the torque applied on the second rotor 7 caused by the stator circuit 2 on the one side and the return torque caused by the coupling 10 will decide the deviation from the reference relative (rotation) position. This allows to control the difference between the rotational position of the two rotors 3, 7 continuously by the torque applied on this second rotor 7. This allows to control the blade angle of the propellor continuously.

Fig. 1 and 2 show in more detail one example of the spring 10 in the shown embodiment. The spring 10 is fixed, here with a screw, on the first rotor 3. The spring 10 is realized as a leaf spring which extends from the first rotor 3 to the second rotor 7. While a first end of the leaf spring is fixed on the first rotor 3, the second end of the leaf spring is fixed to the second rotor 7. Preferably, the second end of the leaf spring engages within a recess 11 of the second rotor 7. Thus, the leaf spring 10 is simply hooked in the second rotor 7. This allows an easy assembling or disassembling of the second rotor 7 with the first rotor 3. The leaf spring 10 has preferably a first portion extending in a rotation or circumferential direction of the first rotor 3 and a second portion extending from the first rotor 3 to the second rotor 7, preferably substantially radially to the rotation axis 6. The leaf spring 10 has preferably a bending point or line, wherein the first portion extends between the first end of the leaf spring and the bending point/line, and the second portion extends between the bending point/line and the second end of the leaf spring 10. This realization allows to fix (the first portion of) the leaf spring stably (e.g. with a screw) in the first rotor 6. The first rotor 3 can comprise as well a recess to arrange the (first portion of the) leaf spring 10 and the fixing means (e.g. the screw). Other types of elastic coupling could be considered, the main purpose being to generate a return torque on the second rotor 7 while this one is subject to an electromagnetic force applied by stator 1.

The coupling can also be simpler. The coupling can comprise two stop positions (corresponding to two blade angles) corresponding each to two different relative rotational positions of the two rotors 3, 7. The two rotors 3, 7 couple in a first stop position, if the speed or torque of the first rotor 3 is larger than the speed or torque of the second rotor 7. The two rotors 3, 7 couple in a second stop position, if the speed or torque of the first rotor 3 is smaller than the speed or torque of the second rotor 7. This would be a very simple coupling two achieve two discrete different blade angle s.

Many other couplings are possible, e.g. by using multiples stops which are removable or by using locking means.

The first rotor 3 is configured to be connected to the propellor such that the rotation of the first rotor 3 causes (directly) the rotation of the propellor around the propellor axis 6. Since the first rotor 3 causes the rotation of the propellor, the first rotor 3 is subsequently also called the main or power rotor 3.

The second rotor 7 is configured to be connected rotatably to the mechanism for changing the blade-angle of the propellor (blade-angle mechanism). The second rotor 7 is preferably connected such to the blade-angle mechanism that the blade-angle mechanism is controlled by the difference of the rotational position of the second rotor 7 with respect to the first rotor 3, i.e. by the relative rotational position of the second rotor 7 with respect to the first rotor 3. Since the second rotor 7 controls the blade-angle (mechanism), the second rotor 7 is can also be called the control rotor 7.

The mechanism for changing the blade-angle of a blade of the propellor is based on the relative rotational position between the first rotor 3 and the second rotor 7. Mechanical mechanisms for changing the blade-angle of at least one blade of the propellor controlled by the rotation angle difference of two rotors or two rotating elements are well known from the state of the art, e.g. when controlled by two electric motors like in EP2028099, and are not described in detail here. Any such mechanism can be used without limiting the invention to one of these embodiments. The blade-angle mechanism and the first rotor 3 can constitute a propellor hub as shown for example in Fig. 1, wherein the rotatable propellor blades (or their blade feet) are rotatably supported in the propellor hub. The propellor hub rotates around the propellor/machine axis 6 with the rotation speed of the first rotor 3. The relative rotational position with respect to the first rotor 3 of the second rotor 7 controls the blade angle of the blade (axle 12). In the example shown in Fig. 1, the blade-angle mechanism is realized such that the rotating foot 12 of each/the blade is provided with an eccentric pin arranged on a lever or with one or more gear teeth 17 which engage/mesh within a rack 18 integral with the second rotor 7. Thus, when the control rotor 7 rotates with respect to the main rotor 3, the blade foot 12 or feet is/are turned. In the shown embodiment, the element of the blade 12 engages with the element 18 of the control rotor 7 along an engagement axis 16 which intersects with the intersection point 15 of the machine/propellor axis 6 and the blade axis 14. However, it would also be possible that the propellor system comprises (instead of the propellor hub) just an interface for connecting the first and second rotor 3, 7 to the propellor. The interface could comprise a first interface, e.g. a connection flange, for connecting the first rotor 3 with the propellor hub and a second interface, e.g. a gear mechanism, for rotating the blades of the propellor.

As mentioned above, the propellor system can comprise also the full propellor. In such a propellor system, the propellor is connected such to the first rotor 3 that the rotation of the first rotor 3 around the machine axis 6 causes a rotation of the propellor around the propellor axis 6. Each of the at least one blade is supported rotatably in the propellor or the first rotor 3 around the blade axis 14 so that the blade angle can be varied. In Fig. 1 such a rotatable support in the first rotor 3 is achieved by bearings 13 which bear the blade foot/axle 12 within the first rotor 3. Thus, the blades rotate around the propellor axis 6 in relation to the rotation of the first rotor 3. The proximal end of the blade is preferably realized as a blade axle 12 which is supported in the bearings 13. As explained already above, the blade axle 12 or the blade axis 14 extends preferably radially to the propellor/machine axis 6. Each of the at least one blade is designed to interact with a fluid or flow external to the machine in accordance with well known techniques of aerodynamic or hydrodynamic propellors. Each blade is connected (via the blade-angle mechanism) to the second rotor 7 so that the blade rotates around the blade axis 14 based on the rotation of the second rotor 7 with respect to the first rotor 3. In the shown embodiment, the rotating blade foot 12 of each blade is provided with an eccentric pin arranged on a lever, or one or more gear teeth 17, which meshes with a rack 18 integral with the second rotor 7. Obviously, other well-known mechanism for controlling the blade angle based on the relative rotational position of the second rotor 7 with respect to the first rotor 3 can be used as well.

Before explaining the functioning of the propellor system with its induction motor, some basics of aerodynamics of a propellor and some basics of electrical motors shall be explained. Even if the calculations are done for the example of an airborne lift creating propellor and for a motor, the invention shall not be limited to such an embodiment. Similar calculations can be performed for similar applications or for other types of fluids, and for thrust applications and for generators.

The coefficient of lift applied to a profile of the blades of the propeller tends to be proportional to the angle of incidence of the fluid flow on the airfoil, as long as the operating point does not approach the stall zones. Therefore, the lift force applied to a lifting airfoil is directly proportional to the lift coefficient, the square of the flow velocity and the density of the density of the surrounding fluid and can be expressed directly as a function of the angle of incidence. The cumulative forces applied on the blade can be approximated by :

$$F = \frac{1}{2}.B.(\varphi - \varphi_n).\rho.T^2.\Omega^2 + F_n \tag{1}$$

where F is the resultant of all lift forces applied to the propellor blades, and thus the useful effect of the propellor, in Newton ; $F_n$ is the resultant of all lift forces applied to the propellor blades for a reference position and speed, in Newton ; $\varphi$ is the angular pitch of the propellor blades, in radian ; $\phi_n$ is the angular pitch of the propellor blades in the reference position, in radian ; B is a proportionality factor, defined on the basis of the integral, applied to the whole rotor, of the velocity polars of the blade sections, and reflecting the effect of the pitch of these blades on the overall lift coefficient of the propellor, expressed in radians ; p is the density of the fluid flowing past the propellor at the upstream infinity, in kilograms per cubic metre ; T is a factor for transforming the rotational velocity of the rotor into the local velocity of the flow over the blade sections, this transformation being linear, in metres per radian, and $\Omega$ is the angular velocity of rotation of the propellor, in radians per second.

The propellor's main function is to accelerate the ambient fluid. In the case of a propellor in a fluid at rest (the typical case of a hovering in hovering flight), the induced velocity $v_i$ of the fluid passing through the propellor disc, in metres per second, can be written as :

$$v_i = \sqrt{\frac{F}{2.\rho.S}}$$

$$(2)$$

The induced power $P_i$ transmitted to the fluid passing through the propellor disc, in Watt, can therefore be written :

$$P_i = F.v_i = \sqrt{\frac{F^3}{2.\rho.S}}$$

$$(3)$$

Starting from the induced power equation (3) expressed previously, the mechanical power delivered by the motor at the propellor axle or the first rotor 3, can be written as :

$$C = \frac{P}{\Omega} = \frac{P_i}{\eta.\Omega} = \frac{1}{\eta.\Omega}.\sqrt{\frac{F^3}{2.\rho.S}}$$

$$(4)$$

where C is the torque applied by the motor at the propellor shaft/axle, in Newton.metres; P is the power injected by the motor at the propellor shaft, in Watt; $\Omega$ is the angular speed of rotation of the propellor or rotor 3, in radian per second; $\eta$ is the figure of merit, or efficiency, of the propellor, assumed to be constant and generally between 60% and 80%, in percent.

The relationship (4) combined with the relationship (1) for which the angular setting corresponding to the reference position is chosen to correspond to the zero lift, allows the reconstruction of the law linking the torque, applied to the propellor by the aerodynamic and the speed of rotation of the latter:

$$C = \frac{1}{4}.\frac{\sqrt{B^3}.T^3}{\eta.\sqrt{S}}.\rho.\sqrt{\varphi^3}.\Omega^2$$

$$(5)/41$$

In addition, the control laws of the motor coupled to the propellor are generally expressed by the speed of the latter. The modification of the blade angle modifies the forces applied to the whole system, and therefore the torques applied to the propellor/rotor shaft. The speed of rotation of the propellor will be impacted upwards or downwards, and the motor will have to react in order to maintain this speed of rotation at the value set elsewhere. This mode of operation is classic and well known. The optimal operation of the airfoils/blades being obtained for flow speeds predefined by the drag polars (drag curve) of the latter. Keeping the rotation speed constant is a relevant condition for optimizing the functioning of the blades of an aerodynamic propellor.

Subsequently, some basics about asynchronous induction machines are explained. The principle of operation of an induction motor is to create an electromagnetic field in the stator circuit 2. The rotating magnetic field of the stator 1 will induce a current in the electric circuit 4, 8 of the rotor 3, 7 which causes an electromagnetic torque to appear on the rotor 3, 7 which starts to rotate in an attempt to try to catch up with the speed of the rotating stator electromagnetic field. More precisely, in nominal operation under loading, the rotor speed of an asynchronous induction machine does not reach the rotational speed of the rotating stator electromagnetic field. The speed of rotation of the rotor 3, 7 of the asynchronous induction motor will therefore reach an equilibrium speed depending on the characteristics of the electrical circuits of the stator 2 and rotor 3, 7, the characteristics of the power supply applied to the stator circuit 2, and the mechanical load torque applied by the external load on the rotor shaft 3, which is often dependent on the rotational speed. The equilibrium rotational speed of the rotor being different from the rotational speed of the stator field, the slip is therefore defined as the ratio of the difference in the rotational speeds of the stator of the rotating stator electromagnetic field and the rotor, divided by the same rotational speed of the stator rotating electromagnetic field. The slip g can be written as follows:

$$g = \frac{\Omega_s - \Omega}{\Omega_s}$$

(6)/47

where $\Omega_s$ is the rotational angular velocity of the stator field, in radians per second; $\Omega$ is the rotational speed of the rotor 3, 7, in radians per second. For the present invention, the induction machine has the same slip g for the first and the second rotor 3, 7. The transitional phase when the first rotor 3 moves with respect to the second rotor 7 is not considered for the slip g.

Furthermore, the description of the operation of the asynchronous induction machine involves electrical parameters such as the number of phases y characterising the stator power supply and the pulsation $\omega$ of the stator power supply which represents the number of periods per second achieved by the latter and which can be related to the frequency f of the same power supply by the relation $\omega = 2.\pi.f$, as well as a set of constructional parameters such as the number of stator electrical windings p per phase.

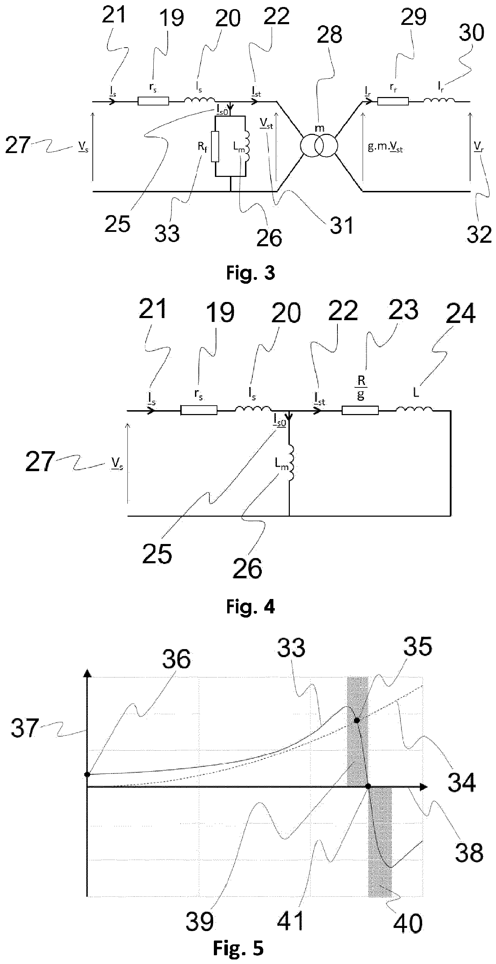

In order to translate the characteristics of the asynchronous induction machine into operational parameters, it is necessary to consider the electrical circuit representing the asynchronous induction machine. Fig. 3 shows this circuit for a single stator winding. This circuit can be simplified using some mathematical transformations and by assuming some approximations to a new equivalent circuit diagram, as shown in Figure 4. These transformations aim to define a fictitious rotor characterised by currents of rotor frequency equal to the frequency of the stator power supply. This transformation allows to represent the stator and rotor quantities on the same vector diagram, and then aim to bring the rotor impedances back to the stator impedances in order to simplify the electrical diagram/circuit of the whole asynchronous induction machine, and finally to apply certain simplifications traditionally accepted by technicians, such as neglecting the Joule effect losses in the stator and neglecting the iron losses in the stator and rotor. This new equivalent circuit diagram, as shown in Figure 4, involves the following main quantities (the secondary quantities, not used in the following, are not explained), an underlined symbol characterising the value of the quantity under consideration as defined by experts in electrical engineering: $V_s$ is the rms supply voltage 27 across terminals of a stator winding, in Volt; $I_s$ is the rms current 21 flowing through a stator winding, in Ampere; m is the voltage transformation ratio 28 between the stator 1 and the rotor 3, 7 in the case where the asynchronous induction machine is mechanically locked in rotation (the stator/rotor assembly then acts as a simple electrical voltage transformer), wherein this parameter is scaled and strictly linked to the constructional parameters of the stator circuit 2 and rotor circuit 4, 8; $L_m$ is the inductance value 26 of a stator winding, in Henry; $r_r$ is the actual value of the ohmic resistance 29 of a rotor loop, in Ohm; $l_r$ is the real value of the inductance 30 of a rotor loop, in Henry; R is the value of an equivalent ohmic resistance 23 of a rotor loop, equal to the ration $r_r/m^2$, in Ohm; L is the value of an equivalent inductance 24 of a rotor winding, equal to the ratio $l_r/m^2$, in Henry. Finally, the equivalent electrical diagram as shown in figure 4 allows to extract the relation giving the electromagnetic torque $C_{em}$ applied to the rotor of the asynchronous induction motor by the stator, in Newton.metres:

$$C_{em} = \gamma . p . \frac{V_s^2}{\omega} . \frac{R/g}{(R/g)^2 + (L.\omega)^2} = \gamma . p . \frac{V_s^2}{\omega} . f(\Omega, \omega)$$

(7)/51

where $\gamma$ is the number of phases, usually one or three depending on whether it is single or three phase; P is the number of stator coils per phase constituting the stator circuit 2; $f(\Omega, \omega)$ being an impedance function grouping together the elements characterising the equivalent impedance of the rotor of the asynchronous induction machine, and the pulsation of the stator power supply. The above relationship will be used in the description of the invention in order to relate the torque exchanged with the aerodynamic rotor with the parameters of the asynchronous induction motor and control the latter according to the needs of the invention.

In this respect, well-known control techniques for asynchronous motors can be summarized as follows: Varying the RMS value of the stator voltages $V_s$; or varying the ratio $V_s/f$ in order to control the power while ensuring that the speed of rotation is virtually independent of the load; or varying the equivalent (second) rotor resistance R, but this solution involves a wound rotor and the presence of contact brushes allowing variable resistances in series with the rotor windings.

In summary, the invention will rely on the characteristics of asynchronous induction motors, and in particular their ability to produce an electromechanical torque irrespective of their effective angular position with respect to the stator of the machine, in order to produce a variable speed drive device (or a variable blade angle device) directly integrated into the asynchronous induction machine, and will use the above control techniques to control both the actual payload (the mechanical torque produced and transmitted) and the pitch (blade-angle) control of the of the propellor blades connected to the rotor of the asynchronous induction motor.

The coupling between the first rotor 3 and the second rotor 7 realized by a spring can be described or approximated by:

$$C_r = K.(\theta - \theta_n) \tag{8}$$

where **Cr** is the return torque applied by the spring 10, in Newton.meter; K being the stiffness of the spring 10, in Newton. meter per radian; $\theta$ is the relative angular displacement between the two rotors 3 and 7, in radian; $\theta_n$ being the relative angular displacement between the two rotors 3 and 7 in a reference position characterized by zero return torque, in radian.

The angle of rotation of the blade feet 12, and thus the angular pitch of the blade(s) can be written as a function depending on the effective angular distance between the two rotors 3 and 7. This angular setting of the blades can therefore be expressed, as a first approximation, according to the following linear relationship:

$$\varphi = A.(\theta - \theta_n) + \varphi_n \tag{9}/11$$

O

Where $\varphi$ is the blade pitch angle, related to the rotation of the blade axle 12, in radian; $\varphi_n$ is the pitch angle of the blades related to the rotation of the blade root (12), when the relative angular offset between the two rotors 3 and 7 is in a reference position, in radian, wherein the reference position corresponds preferably to the reference position in which the return torque of the coupling is zero; A is the transformation factor between the angle characterising the rotation of the blade axle 12 and the relative angular displacement between the two rotors 3 and 7, which is related to the respective geometries of the two intermeshing rotors.

The load applied by the external environment on the asynchronous induction motor, and more specifically applied by the blades of the propellor is given by the equation (5) representing the load curve. By combining the equations (5), (8) and (9), the load torque on the first rotor 3 can be represented as

$$C_u = \frac{1}{4}.\frac{\sqrt{B^3}.\sqrt{A^3}.T^3}{\eta.\sqrt{K^3}.\sqrt{S}}.\rho.\sqrt{C_r^3}.\Omega^2 \tag{10}$$

Where $C_u$ is the resultant torque applied by the aerodynamic effects on the first rotor 3, in Newton.meter; $\eta$ is the figure of merit, or efficiency, of the propellor as defined above; B is the proportionality factor, as defined above; T is the transformation factor of the local velocities of the flow over the blade sections into the rotational speed of the propellor, this transformation being linear, in metres per radian; S is the area swept by the propellor, in metre squares; $p$ is the density of the fluid flowing through the aerodynamic or hydrodynamic rotor hydrodynamic propellor, in kilograms per cubic metre; $\Omega$ is the angular speed of rotation of the first rotor 3 and thus also of the second rotor 7 coupled over the coupling 10 to the first rotor 3, in radian per second.

According to the invention, the second rotor 7 and its electrical circuit 8 behave as an asynchronous induction machine interacting with the rotating stator electromagnetic field produced by the stator electric circuit 2 independently from the first rotor circuit 4. In case of the coupling by an elastic element 10, the second rotor 7 receives on the one side the electromagnetic torque from the stator 1 and the return torque from the coupling 10. The electromagnetic torque $C_{er}$ applied by the stator 1 to the second rotor 7 can be represented by the laws of asynchronous induction machines by :

$$C_{er} = \gamma.p.\frac{V_s^2}{\omega}.\frac{R_R/g}{(R_R/g)^2+(L_R.\omega)^2} = \gamma.p.\frac{V_s^2}{\omega}.f_R(\Omega,\omega) = C_r \tag{11}$$

where y is the number of phases of the stator power supply; P is the number of coils per phase constituting the stator circuit 2, usually one or three depending on whether the power supply is single or three phase; $R_R$ is the value of an equivalent resistance of a loop of the electrical circuit 8 of the secondary control rotor 7, in Ohm; $L_R$ is the value of an equivalent inductance of a winding of the electric circuit 8 of the secondary control rotor 7, in Henry; g is the slip characterizing the difference of the speed of the two rotors 3 and 7 with the stator field produced by the electric circuit 2, and which can also be expressed as a function of $\Omega$ and $\omega$, in percent; $f_R(\Omega, \omega)$ being the simplifying impedance function grouping the elements characterising the equivalent impedance of the electrical circuit 8 of the secondary control rotor 7.

The return torque $C_r$ of the spring 10, under the assumption of established equilibrium is equal to the electromagnetic torque $C_{er}$ applied by the stator electric circuit 2 on the circuit 8 of the second rotor 7. Using the equations (10) and (11), the coupling of the propellor on the first rotor 3 can be expressed by :

$$C_u = \frac{1}{4} \cdot \frac{\sqrt{B^3} \cdot \sqrt{A^3} \cdot T^3 \cdot \sqrt{\gamma^3} \cdot \sqrt{p^3}}{\eta \cdot \sqrt{K^3} \cdot \sqrt{S} \cdot \sqrt{\omega^3}} \cdot \rho \cdot V_s^3 \cdot \Omega^2 \cdot \sqrt{f_R^3(\Omega, \omega)} \tag{12}$$

The equation (12) allows to establish the law of the load torque applied to the system as a function of the speed of rotation. Thus, equation (12) provides the load curve 34 of the propellor motor in dependence of the motor/propellor speed $\Omega$. As can be seen, the load torque depends also on the electrical parameters applied to the electrical circuit of the stator 2 like for example the supply voltage $V_s$ of the stator circuit 2 and the pulsation $\omega$ of the stator power supply.

The equations derived above are based on a number of approximations which neglect non-linear effects. So, the above equations are approximations to show the concept of the invention. More exact equations can be derived by considering also these non-linear effects, but the working principle of the invention will not change. The equations are actually not needed for the control, as the control works normally via a feedback loop, e.g. related to the thrust and/or speed. On the other side, the behaviour of the first rotor 3 can be described by equation (7) which establishes the motor torque as a function of the constructional parameters of the stator 1 and rotor 3, in particular its electrical circuits 2, 4 and the variables of the power supply of the stator circuit 2. This dependency describes thus the motor curve 33 of the induction motor. As shown in Fig. 5, the intersection point 35 of the motor curve 33 and the load curve 34 defines the operation point of the motor. The graph in Fig. 5 shows the coupling or torque 37 of the motor or load on the y-axis and the rotation speed 38 of the rotor 3 or propellor on the x-axis. Point 41 shows the synchronization speed at which the slip and motor torque become zero. The zone 39 is the stable operation zone for an induction motor. The zone 40 refers to the stable operation zone of an induction generator.

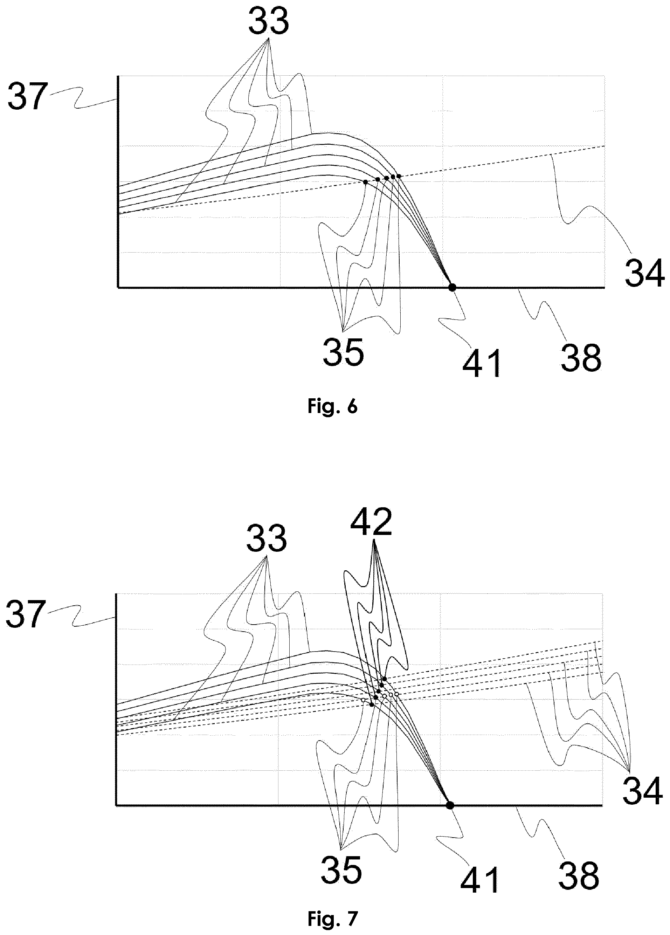

Fig. 6 shows now the diagram of Fig. 5 for different supply voltages of the induction motor. The motor curve 33 is drawn for different supply voltages $V_s$ of the stator circuit 2. The different intersection points 35 show the different operation points of the motor, when the supply voltage $V_s$ is changed. Thus, this shows a state of the art control of the propellor speed controlled by the supply voltage $V_s$ of the induction motor. When the supply voltage $V_s$ is augmented, the motor torque produced is increased and the intersection point 35 with the load curve 34 moves to a higher rotor speed. Thus, by increasing the supply voltage, the propellor speed can be increased.

In the present invention, the coupling between the first and the second rotor causes that certain parameters of the first and second rotor 3, 7 (like $\Omega$, $\omega$, $V_s$, g) are the same, once the relative rotational position of the first and second rotor 3, 7 have found their equilibrium state. Thus, the diagram of Fig. 5 applies equally to the induction motor of the present invention in a stable operation state. Just when changing the operational parameters and the relative position of the first and second rotor 3, 7 need to find a new stable relative rotational position, these approximations do not apply. However, these transitory states are only of short duration, because the system always tries to find the new stable state when the parameters are changed.

When now increasing in the exemplary embodiment of the present invention the supply voltage $V_s$, the second rotor 7, for its part, will see the rotating stator magnetic field intensify its effect on its circuit 8 and will see the electromagnetic torque to augment based on equation (11). This torque will oppose the return torque of the spring 10 linking the two rotors 3 and 7 until a position characterising an equilibrium between the electromagnetic and return torque is found. The two rotors 3 and 7 then agree on an identical speed of rotation, but on a relative angular distance/position between the two rotors 3 and 7 which is greater than in the initial state of equilibrium, in accordance with the increase in the electromagnetic torque seen by the secondary rotor 7. In accordance with the invention, the blade-angle mechanism (here 17 and 18) transforms the relative angular displacement of the two rotors 3 and 7 into a pitch angle blade(s) of the propellor. Thus, an increase of the supply voltage of the stator 1 would lead not only to an increase of motor speed, but also to a change of the blade of the propellor, i.e. to an increase of the pitch of the blade. This is shown in Fig. 7 by the different intersection points 42 corresponding to different operating points of the induction motor of this embodiment of the invention for different supply voltages. As the change of the supply voltage of the stator circuit 2 has an influence on the angle of the blades of the propellor, it has also an influence on the load curve. By increasing the supply voltage, the pitch of the blade increases and thus the load increases as well. This is why, Fig. 7 shows one load curve for each supply voltage of the stator circuit 2. The operation points of the induction motor 42 for different values of the supply voltage is defined by the intersection point of the respective motor curve 33 and respective load curve 34 related to one supply voltage.

Since the increase of the supply voltage increases as well as the pitch of the blades of the propellor, the increase of the supply voltage increases more the torque 37 and less the speed (compared to a classic control with fixed blade angles as shown in Fig. 6). Thus, the present example shows a way to control blade angle of the propellor (and thus the torque produced) based on an electrical parameter of the circuit of the induction machine, here of the stator circuit 2. So, the invention allows to control the blade angles with the electric parameter of the same induction motor driving the propellor. This will be called subsequently as the first control embodiment in which the blade angles are controlled by the supply voltage of the stator circuit 2 (which equally controls the speed/torque of the propellor.

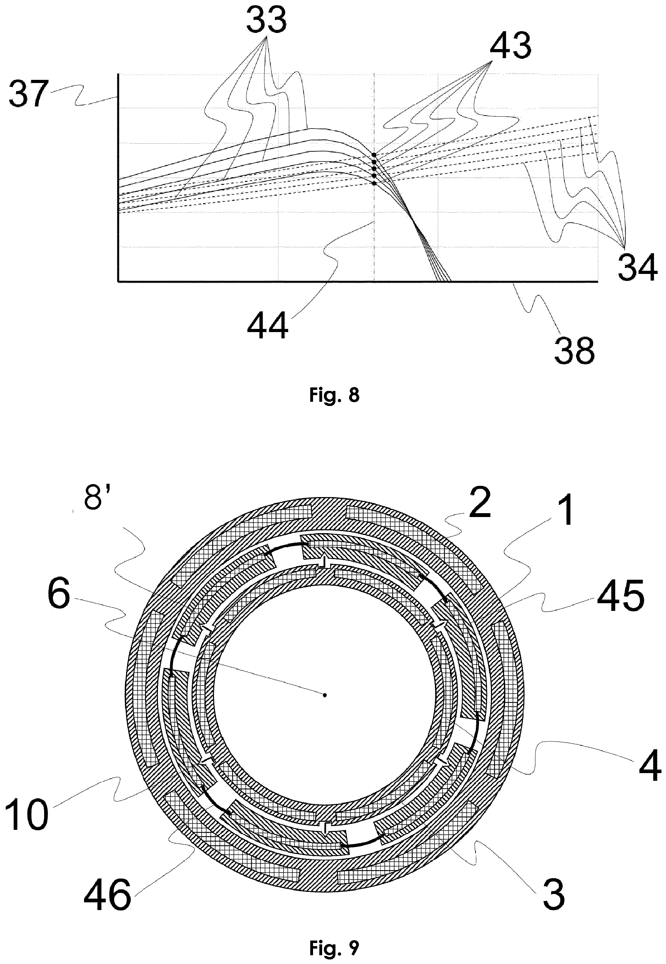

One disadvantage of the control of the described first control embodiment is that the change of (only) the supply voltage changes speed and torque. Consequently, in the first control embodiment, the speed cannot totally be controlled versus torque. It is however desirable to have a control which allows to change the torque or the blade angle without changing the speed, or with a more accurate and independent control of the speed. This can be achieved in a second control embodiment by a control which changes the supply voltage $V_s$ and the pulsation $\omega$ at the same time to compensate by a lower pulsation the increase of speed caused by a higher supply voltage. By having two control parameters of the stator circuit 2, the speed and torque (or blade angle) can be chosen freely in a certain operating range. If a control of the blade angle or torque for a fixed speed is desired, the ratio $V_s / \omega$ of the supply voltage can be changed so that the speed remains constant and just the blade angle varies as shown in Fig. 8. Here the operating points 43 of the motor are shown at different ratios keeping thus a fixed speed 44.

In a third control embodiment, the control of the blade angle is not achieved by controlling the parameters of the stator circuit 2, but by controlling the parameters of the first and/or second rotor circuit 4, 8. Preferably, the parameter of the second rotor circuit 8 is varied. This can be achieved by having at least in the second rotor circuit 8 a variable wound circuit. The winding(s) of the second rotor circuit 8 are connected to a variable electric component allowing to change the resistance of the second rotor circuit 8. This is a well-known technique to allow to change the electromagnetic coupling on the rotor of an induction motor. In the present invention, this is used to change the electromagnetic torque only of the second rotor 7 and to change thus the rotational relative position between the first and second rotor 3, 7 based on the variable resistor. So, the propellor speed/torque is controlled by a first control parameter (e.g. the supply voltage of the stator circuit 2, the supply voltage and pulsation of the stator circuit 2 or the resistance of the variable wound circuit 4 of the first rotor 3), while the blade angle can be independently be controlled by a second control parameter (here the value of the variable electric component or resistor). The electromagnetic torque applied on the second rotor 7 controlled by the variable resistor defines thus the relative rotational position between the two rotors 3, 7 based on the equilibrium state with the return torque of the spring 10. Thus, a very simple variable blade angle control at fixed speed can be realized by this embodiment, accepting the disadvantage of the brush and slip ring necessary. Since the blade angle is completely independent from the stator control, i.e. from supply voltage $V_s$ and the pulsation $\omega$ at, a more precise blade angle control is possible.

The induction motor and/or the propellor system comprises preferably a control circuit which is configured to control the blade angle by changing a control parameter of the induction motor, preferably by changing an (electrical) parameter of the stator circuit 2, first rotor circuit 4 and/or second rotor circuit 8. In the described first and second control embodiment, the control circuit can be the motor control of the induction motor controlling the propellor and the blade angle by varying (only) the supply voltage or by varying the combination of the supply voltage and the pulsation. In the third control embodiment, the control circuit controls/varies the resistance of the second rotor circuit 8 to change the blade angle. In this embodiment, the control of the blade angle by the control circuit is preferably distinct from the motor control, but could obviously be integrated as well in the motor control. There are obviously other realizations of the invention which allow to vary the blade angle by varying different parameters of the stator circuit 2, the first rotor circuit 4 and/or the second rotor circuit 8.

In all above-described embodiment, the blade angle of all blades (with variable blade angle) are controlled in the same way by the angle offset between the first and second rotor 3, 7. This allows a classic variable pitch control as necessary for changing the total thrust or lift created by the propellor. However, it does not allow a variable control of thrust or lift to steer the vehicle as it is realized by the cyclic variable pitch mechanism in a helicopter where the blade angle of the blades of the propellor can be controlled each differently depending on their rotational position around the propellor axis. The subsequent embodiment allows to realize such a cyclic variable pitch control on the level of each blade of the propellor.

In this embodiment, the second rotor 7 comprises a plurality of second rotor segments 45 which are arranged rotatably to each other. This means that each second rotor segment 45 rotates around the machine axis 6 independently from the remaining second rotor segments 45.

Each second rotor segment 45 has a second rotor circuit segment 8' electromagnetically coupled to the stator circuit 2. This means that each second rotor segment 45 is coupled to the stator circuit 2 by its own second rotor circuit segment 8' so that each rotor segment 45 has its own independent electromagnetic coupling with the stator circuit 2. To improve the performance, the second rotor circuit segments 8' are electrically connected, preferably short-circuited (among each other) to form together the second rotor circuit 8 of an induction machine. For example, in the shown embodiment, the circuit segments 8' are electrically connected with the respective two neighboring circuit segments 8' in order to form a short circuit loop of an induction rotor as for example in a squirrel cage type rotor. This connection is done by an electrical connection which allows to conduct electrical current between the neighboring circuit segments 8' which allows that the circuit segment 8' can change their relative distance among them. This can be achieved for example by cables 46 which is at least as long as the maximum distance between neighboring segments 45 allowed by the couplings 10. However, the second rotor 7 can also be of the wound type with each second rotor circuit segment 8' having a winding. In the case of a variable wound type, the different circuit segments 8' are connected to each other via the circuit behind the slip/commuting ring and the cables between the segments 8' are not necessary. However, it is also possible that each second rotor circuit segment 8' forms its own circuit which is not connected to the other second rotor circuit segments 8'. However, if they are connected together, their performance is better.

Each of the second rotor segments 45 is connected by a different coupling 10 to the first rotor 3. Each coupling 10 has the function to couple the rotation of the respective segment 45 to the first rotor 3 but allowing a certain movement within the relative rotational position of the respective segment 45 and the first rotor 3. Each of the couplings 10 has the same function of the single coupling between the second rotor 7 and the first rotor 3 described above, just with respect to the respective second rotor segment 45 instead of the whole second rotor 7. Therefore, the description is not repeated again here and it is referred to the above description. Preferably, the couplings 10 are realized as elastic couplings, preferably as springs. The couplings 10 of the segments 45 are realized preferably in the same way, e.g. each with the same spring constant and thus creating all the same return torque (with the same deviation from the zero position).

The relative rotational position of each segment 45 with respect to the first rotor 3 controls a blade-angle of a different blade of the propeller. Therefore, the blade-angle mechanism comprises one sub-mechanism for each segment 45, wherein each sub-mechanism is configured to control the blade-angle of at least one blade of the propeller (a different one compared to the other blades of the propellor controlled by other sub-mechanisms) based on the relative rotational position of the respective segment 45 with respect to the first rotor 3. Therefore, the different segments 45 allow to control the different blade angles on the different blades of the propellor differently from each other.

The blade-angles of the different blades of the propeller are preferably controlled by a cyclic blade angle control. This means that in one control setting/configuration the blade-angle of each blade is not (necessarily) constant, but all variable blades of the propellor have the same blade angle at the same absolute rotational position of the propellor in the stator coordinate system (as well known for example for a helicopter control). Thus, one control setting sets the different blade angles (not fixed for each blade but) fixed for the different absolute rotational positions of the stator 1 around the machine axis 6. In other words, one control setting/configuration fixes the blade angles of the blades of the propellor not in the (rotating) coordinate system of the propellor, but in the coordinate system of the stator 1. Thus, one control setting with different angles at different absolute rotational positions of the induction machine/stator causes the blades of the propellor to continuously change during one rotation of the propellor, while the blade angles of the blades at a certain absolute rotational position of the stator will have always the same blade-angle (as long the control setting or configuration is not changed). In order to obtain such cyclic blade-angle control, the induction machine comprises a plurality of electric parameters referring to one or more electric parameters of the induction machine at different (absolute) rotational positions of the induction machine. The (absolute) rotational positions of the induction machine refer to the rotational or angular positions in the coordinate system of the stator 1, i.e. from 0° to 360°. The propeller or first rotor 3, when doing one complete turn, passes once at all rotational positions of the induction machine. The different electric parameters at the different rotational positions can be controlled such that the second rotor segments 45 when passing at a first absolute rotational position have a first relative rotational position with respect to the first rotor 3 depending on the electric parameter(s) at the first absolute rotational position, while the second rotor segments 45 when passing at a second absolute rotational position have a second relative rotational position with respect to the first rotor 3 depending on the electric parameter(s) at the second absolute rotational position. In one moment of time or in one propeller position, the following holds. The torque on the first rotor 3 is always the same as the first rotor 3 is a single rotor. The second rotor segment 45 at the first absolute rotational position will have a first electromagnetic torque based on the electrical parameter(s) at the first absolute rotational position. The second rotor segment 45 at the second absolute rotational position will receive a second electromagnetic torque based on the electrical parameter(s) at the second absolute rotational position at the second absolute rotational position and the first rotor 3. The equilibrium state between the return torque of the second rotor segment 45 at the first absolute rotational position and the first electromagnetic torque defined above will define the relative rotational position between the second rotor segment 45 at the first absolute rotational position and the first rotor 3, and thus define the angle of the blade at the first absolute rotational position. The equilibrium state between the return torque of the second rotor segment 45 at the second absolute rotational position and the second electromagnetic torque defined above will define the relative rotational position between the second rotor segment 45 at the second absolute rotational position and the first rotor 3, and thus define the angle of the blade at the second absolute rotational position. If the electrical parameters at the first and the second rotational positions are different, the angles of the blades at the first and second rotational position (first blade angle and second blade angle) are different then. Assuming now that the propellor continues to rotate from the first to the second absolute rotational position (without changing the control setting), the blade which was before at the first rotational position will rotate around the propeller axis to the second rotational position and at the same time will rotate around the blade axis 14 from the first blade angle to the second blade angle.

One realization to change the electrical parameter of the induction machine could be to have a stator current whose parameters vary over the rotational absolute positions of the induction machine. E.g. different phases, or even different poles in the same phase, could be controlled by different currents, e.g. by different amplitude of the supply voltage. In another embodiment, the parameter of the second circuit segments 8' can be varied over the rotational absolute positions of the induction machine.

While in a preferred embodiment (as described above), the first and second rotor 3, 7 receive the same rotating magnetic field generated from the stator 1, it is also possible that the stator circuit 2 comprises a first stator sub-circuit electromagnetically coupled to the first rotor circuit 4 (without coupling with the second rotor circuit 8) and a second stator sub-circuit electromagnetically coupled to the second rotor circuit 8 (without coupling with the first rotor circuit 4). This would allow to control the first and second rotor 3, 7 completely independent by applying different electrical parameters in the different stator sub-circuits. However, this increases the complexity of the system as two stators are necessary, and two machine controls are necessary. In this embodiment, the first and the second rotor 3, 7 would still be coupled by the coupling described above which would reduce the difficulty to control the two rotors 3, 7 to run at the same speed at a precise angular distance. The second stator circuit could be driven by the same motor control and could thus conduct the same driving current to avoid a second motor control. In such an embodiment, the control of the blade angle would be as described in the embodiments above. It is however also possible to provide a second motor control for the second stator circuit which would allow to change the blade angle by changing the parameters of the second stator circuit without changing the parameter of the first stator circuit. Thus, the control of the blade angle by the second stator circuit could become independent from the propellor speed control of the propeller by the first stator circuit (similar to the third embodiment above).

Even if the above-described control applied principally to a motor application, the propellor system can equally be applied to an induction machine in the generator mode. An application could be for example a wind turbine with variable blade angles. If the induction machine is run as a generator, an exciting current must be applied in the stator circuit 2 to induce a current in the rotor circuit(s) 4, 8, the external torque applied on the propellor and on the first rotor 3 increasing the rotation speed of the whole system and driving the induction machine in the generator area 40 identified in Fig. 5. In this case, the induction machine will restitute energy to the electrical network, working as a generator. As per the invention, both rotor 3, 7 are coupled via a coupling as described here above, and the rotor 7 will be subject to two torques, one coming from this coupling, the other one being applied on the rotor circuit 7 by the electromagnetic field generated by the stator circuit 2. Furthermore, both rotors 3, 7 are connected via a mechanical coupling transforming the rotational relative position of both rotors 3, 7 into a rotational position of the blades of the propellor constituting, for example, a wind turbine. When the aerodynamic torque applied by the external flow on the propellor is modified, the equilibrium of torque applied on the second rotor 7 will change, leading to a modification of the rotational relative position between both rotors 3, 7, thus leading to a modification of the rotational position of the blade of the propellor, thus leading to the modification of the global torque applied on this propellor, thus leading to a different stable rotational speed of the whole system. Considering the description of the invention as above, is it thus possible, by modifying the electrical parameters of the induction machine, and more specifically by modifying the electrical parameter of the first and/or second rotor circuit 4, 8, preferably the ohmic resistance of the second rotor circuit 7, to control the rotational position of the blades of the propellor, thus to control the torque and speed on the whole system whatever the load applied by the external flow on the propellor.

Even if the above-described control applied principally to an aerodynamic application, the principal can be transferred to another fluid. In the generator, instead of the supply voltage and/or pulsation of the driving current, the supply voltage and/or pulsation of the excitation current is changed or in the third embodiment the parameter(s) of the first and/or second rotor circuit 4, 8.

The described propellor system is preferably used in a vehicle to move the vehicle, preferably in an aircraft or a watercraft. But theoretically it could also be applied to a land vehicle. The embodiment is particularly advantageous for a rotorcraft, especially when using the embodiment with the cyclic control of the blade angle.

The described propellor system can however also be used in other application fields, e.g. in a pump. The propellor system can also be used in a generator application, e.g. in a wind mill or a water mill which transfers the fluid flow into a rotation of the propellor and the first rotor to induce a current in the stator to generate energy. Many other applications of the invention are possible.

It should be understood that the present invention is not limited to the described embodiments and that variations can be applied without going outside of the scope of the claims.

**Claims**

1. Propellor system comprising an induction machine and a mechanism for changing a blade-angle of a blade of a propellor, wherein the induction machine comprises:

   a stator (1) with stator circuit (2) conducting a machine current;
   a first rotor (3) arranged to rotate around a machine axis (6) with respect to the stator (1), wherein the first rotor (3) comprising a first rotor circuit (4), wherein the first rotor circuit (4) is configured to electromagnetically couple with the stator circuit (2), wherein the first rotor (3) is configured to be connected rotatably to the propellor;
   a second rotor (7) arranged to rotate around the machine axis (6) with respect to the stator (1), the second rotor (7) comprising a second rotor circuit (8), wherein the second rotor circuit (8) is configured to electromagnetically couple with the stator circuit (2),
   a coupling (10) configured to couple the rotation of first rotor (3) with the rotation of the second rotor (7) and to allow a relative movement of the first rotor (3) with respect to the second rotor (7),
   a control circuit for controlling the relative rotational position of the second rotor (7) with respect to the first rotor (3) by controlling at least one parameter of the stator circuit (2), of the first rotor circuit (4) and/or of the second rotor circuit (8),
   wherein the mechanism for changing the blade-angle is configured to change the blade of the propellor based on the relative rotational position of the second rotor (7) with respect to the first rotor(3).

2. Propellor system according to claim 1, wherein the coupling (10) is an linear or non-linear elastic coupling which causes an increasing return torque when the relative distance of the relative rotational position with respect to a reference rotational position of the second rotor (7) with respect to the first rotor (3) increases, wherein the relative rotational position of the second rotor (7) with respect to the first rotor (3) is defined by the equilibrium state of the return torque and the electromagnetic torque applied on the second rotor (7), wherein this electromagnetic torque applied on the second rotor (7) is controlled based on the at least one parameter of the stator circuit (2), of the first rotor circuit (4) and/or of the second rotor circuit (8).

3. Propellor system according to claim 1 or 2, wherein the first rotor circuit (4) and/or the second rotor circuit (8) comprise a variable rotor parameter which can be changed, wherein the relative rotational position depends on the variable rotor parameter.

4. Propellor system according to claim 3, wherein the first rotor circuit (4) and/or the second rotor circuit (8) comprise a winding connected to a variable electric component, wherein the variable electric rotor parameter can be changed over the variable electric component.

5. Propellor system according to claim 4, wherein the variable electric component is arranged outside of the first or second rotor (3, 7) and connected with the winding in the first and/or second rotor (3, 7) over a slip ring.

6. Propellor system according to one of the previous claims, wherein the relative rotational position depends on at least one variable stator parameter of the stator circuit (2), wherein the variable stator parameter refers preferably to a variable electric parameter of the machine current.

7. Propellor system according to the previous claim, wherein the relative rotational position is configured to be controlled by the amplitude of a supply voltage of the machine current.

8. Propellor system according to the previous claim, wherein the relative rotational position is configured to be controlled by the amplitude and the pulsation of the supply voltage of the machine current.

9. Propellor system according to one of the previous claims, wherein the mechanism for changing the blade-angle of a blade of the propellor is configured to change the blade angle of a plurality of blades differently, wherein the second rotor (7) comprises a plurality of second rotor segments (45) which are arranged rotatably to each other, wherein each second rotor segment (45) has a different coupling (10) with respect to the first rotor (3), wherein each second rotor segment (45) has a second rotor circuit segment (8') electromagnetically coupled to the stator circuit (2), wherein the relative rotational position of each second rotor segment with respect to the first rotor controls the blade-angle of at least one blade of the propellor.

10. Propellor system according to the previous claim, wherein the at least one electric parameter of the induction machine comprise a plurality electric parameters referring to one or more electric parameters of the induction machine at different rotational positions of the induction machine, wherein the different electric parameters at the different rotational positions can be controlled such that the second rotor segments (45) when passing at a first rotational position have a first relative rotational position with respect to the first rotor (3) depending on the electric parameter(s) at the first rotational position, while the second rotor segments (45) when passing at a second rotational position have a second relative rotational position with respect to the first rotor (3) depending on the electric parameter(s) at the second rotational position.

11. Propellor system according to the previous claim, wherein each second rotor segment (45) comprises at least one winding, wherein the induction machine comprises a slip ring which connected at different rotational positions with different variable electric components, wherein the windings of the second rotor segments are connected to the variable electric component connected with the slip ring at its respective angular position so that the different electric parameters at different angular positions are realized by the different variable electric components.

12. Propellor system according to claim 10, wherein the stator circuit (2) comprises different stator windings arranged at different rotational positions of the induction motor, wherein the different electric parameters at different angular positions are realized by the different windings.

13. Propellor system according to one of claims 9, 10 and 12, wherein the second rotor circuit segments (8') of neighboring second rotor segments are connected in series to form a short circuit in a circle.

14. Propellor system according to one of the previous claims, wherein the first and second rotor (3, 7) are arranged in the same rotating magnetic field generated from the same stator circuit (8).

15. Propellor system according to one of the claim 1 to 13, wherein stator circuit (8) comprises a first stator circuit and a second stator circuit, wherein the first rotor (3) is electromagnetically coupled to the first stator circuit (4), and the second rotor (7) is electromagnetically coupled to the second stator circuit (8).

**Fig. 1**

**Fig. 2**

Fig. 3

Fig. 4

Fig. 5

Fig. 6

Fig. 7

Fig. 8

Fig. 9

Europäisches
Patentamt

European
Patent Office

Office européen
des brevets

# EUROPEAN SEARCH REPORT

Application Number

EP 22 20 6587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/151129 A1 (SCHLEIFFELDER MANUEL [AT]) 5 August 2021 (2021-08-05) | 1-13,15 | INV.<br>H02K16/02<br>H02K17/02<br>B63H3/02 |
| A | * pages 3, 7-9; figures 2-10 * | 14 | |
| X | US 2013/115832 A1 (SUZUKI TAKAYOSHI [JP] ET AL) 9 May 2013 (2013-05-09) | 1-13,15 | |
| A | * paragraphs [0208] - [0210] * | 14 | |
| X | US 5 967 749 A (EAVES STEPHEN [US] ET AL) 19 October 1999 (1999-10-19) | 1-13,15 | |
| A | * column 1 - column 3; figures 1-4 * | 14 | |
| A | EP 2 028 099 B1 (BADER INGO [NL]) 15 September 2010 (2010-09-15)<br>* figures 1,2 * | 1-15 | |
| A | US 5 211 539 A (MCCARTY FREDERICK B [US]) 18 May 1993 (1993-05-18)<br>* figures 1-6 * | 1-15 | |
| A | US 2014/322017 A1 (DUVAL CEDRIC [FR] ET AL) 30 October 2014 (2014-10-30) | 1-15 | **TECHNICAL FIELDS SEARCHED (IPC)**<br><br>B64C<br>H02K<br>B63H |

The present search report has been drawn up for all claims

| Place of search | Date of completion of the search | Examiner |
|---|---|---|
| The Hague | 1 May 2023 | Ganchev, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 6587

This annex lists the patent family members relating to the patent documents cited in  the above-mentioned European search report.
The members are as contained in the European Patent Office EDP file on
The European Patent Office is in no way liable for these particulars which are merely given for the purpose of information.

01-05-2023

| Patent document cited in search report | | Publication date | Patent family member(s) | | Publication date |
|---|---|---|---|---|---|
| WO 2021151129 | A1 | 05-08-2021 | AT | 523262 A4 | 15-07-2021 |
| | | | WO | 2021151129 A1 | 05-08-2021 |
| US 2013115832 | A1 | 09-05-2013 | EP | 2591995 A1 | 15-05-2013 |
| | | | JP | 5844617 B2 | 20-01-2016 |
| | | | JP | 2013100014 A | 23-05-2013 |
| | | | US | 2013115832 A1 | 09-05-2013 |
| US 5967749 | A | 19-10-1999 | EP | 0928738 A2 | 14-07-1999 |
| | | | JP | H11245889 A | 14-09-1999 |
| | | | US | 5967749 A | 19-10-1999 |
| EP 2028099 | B1 | 15-09-2010 | AT | 481312 T | 15-10-2010 |
| | | | EP | 2028099 A1 | 25-02-2009 |
| US 5211539 | A | 18-05-1993 | NONE | | |
| US 2014322017 | A1 | 30-10-2014 | BR | 112014012388 A2 | 30-05-2017 |
| | | | CA | 2854991 A1 | 30-05-2013 |
| | | | CN | 103958346 A | 30-07-2014 |
| | | | EP | 2782827 A1 | 01-10-2014 |
| | | | FR | 2983235 A1 | 31-05-2013 |
| | | | JP | 2015500933 A | 08-01-2015 |
| | | | RU | 2014125431 A | 27-12-2015 |
| | | | US | 2014322017 A1 | 30-10-2014 |
| | | | WO | 2013076431 A1 | 30-05-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2490935 A
- EP 2028099 A
- EP 3681023 A